# EUROPEAN PATENT SPECIFICATION

(11) **EP 1 307 317 B1**
(45) Date of publication and mention of the grant of the patent: **15.10.2008**
(21) Application number: 01955155.5
(22) Date of filing: 02.08.2001
(51) Int. Cl.: B23Q 3/10, G05B 19/4097

(54) **METHOD FOR MANUFACTURING A SUPPORTING AND/OR REFERENCE CONSTRUCTION**
VERFAHREN ZUR HERSTELLUNG EINER STÜTZ- UND/ODER REFERENZKONSTRUKTION
PROCEDE DE FABRICATION D'UNE CONSTRUCTION DE SUPPORT ET/OU DE REFERENCE

(30) Priority: 09.08.2000 BE 200000500
(43) Date of publication of application: 07.05.2003
(73) Proprietor: Materialise, Naamloze Vennootschap, 3001 Heverlee (BE)
(72) Inventor: VANCRAEN, Wilfried, Frans, Isidoor, B-3040 Huldenberg (BE); VAN DER SCHUEREN, Bart, B-3010 Kessel-LO (BE)
(74) Representative: Bird, Ariane
(86) International application number: PCT/BE2001/000127
(87) International publication number: WO 2002/011945

(56) References cited:
- EP-A- 0 366 069
- EP-A- 0 375 009
- US-A- 5 278 953
- US-A- 5 343 611
- US-A- 5 546 314
- US-A- 5 732 194
- US-A- 5 907 489
- "VORRICHTUNGSERSTELLUNG IM BAUKASTENSYSTEM" FORM + WERKZEUG,DE,HANSER FACHZEITSCHRIFTEN, no. 1, 1 March 1996 (1996-03-01), page 36 XP000591237
- BAUSCH J J ET AL: "KINEMATIC METHODS FOR AUTOMATED FIXTURE RECONFIGURATION PLANNING" , PROCEEDINGS OF THE INTERNATIONAL CONFERENCE ON ROBOTICS AND AUTOMATION,US,LOS ALAMITOS, IEEE COMP. SOC. PRESS, VOL. -, PAGE(S) 1396-1401 XP000143760 ISBN: 0-8186-9061-5 page 1401, left-hand column, last paragraph

## Description

The present invention concerns a method for manufacturing a supporting and/or reference construction for supporting and positioning and/or calibrating a piece made on the basis of a digital description of the piece which supporting and/or reference construction consists of a base structure and a number of supporting and/or reference structures fixed on it. Such a method according to the preamble of claim 1 is known from the document "Vorrichtungserstellung im Bautrastsystem" in "Form+Wertzeug", published by Hanser Fochzeitschiften (DE) March 1996 edition, page 36 (XP000591237).

A manufactured part of a whole, in particular a piece made with rapid prototyping techniques, usually has to be accurately measured so as to check whether it fits in the whole.

Especially if the shape of this part or piece is rather complicated, it has to be fixed on a supporting construction so as to allow for an accurate measuring.

In the case of pieces which are not very rigid, such as some pieces made of plastic, the actual shape has to be supported in order to be able to control their dimensions, since they can bend under their own weight.

In other cases, use can be made of a reference construction or template which either or not simultaneously provides a support, in order to check whether the dimensions of the piece are correct.

Also the correct measuring, processing or assembly of some mechanical parts requires supporting structures so as to maintain them in their position during said operation.

Large objects made with what are called rapid prototyping methods, or other design techniques, are made in smaller pieces due to the restrictions of the machines used thereby, which are subsequently glued together. These smaller pieces are usually even less stable than the object, and gluing faults are passed on from one piece to another, which results in a large fault in the final object.

That is why, during the gluing, the pieces have to be perfectly positioned and supported.

American patents No. 3.846.917 and No. 5.305.992 describe supporting structures in the shape of modular work-holding fixtures which should allow for an accurate positioning of a piece.

However, these structures can support the piece locally, but on the points of contact the supporting surface does not acquire the shape of the piece.

Moreover, these structures offer no reference whatsoever to the digital description of the piece, which implies that the fixture has to be measured out and fitted in order to obtain a good support, which is time-consuming.

Another method consists in designing a negative mould of the piece or the lower part thereof on the basis of the digital description, for example the CAD model, and in manufacturing the supporting or reference construction by means of mechanical processing, for example milling.

However, this method is time-consuming, both as far as the production of the negative design and the manufacturing of the structure is concerned, and it entails costs which are often higher than those for manufacturing the actual piece.

Another known method consists in designing a supporting and/or reference structure by means of a computer (CAD or computer aided design), and by subsequently building this designed structure with a number of standard components. The building of the structure is rather time-consuming, and as there is no coupling towards the piece, a perfect connection of the piece on the structure is difficult to realise.

The invention aims a method for manufacturing a supporting and/or reference construction which avoids the above-mentioned and other disadvantages and which makes it possible to produce such a fitting construction in a rapid, economical manner.

This aim is realised according to the invention by applying the steps of independent claim 1.

As the supporting and/or reference structures are automatically produced by means of CAM or rapid prototyping techniques after the design stage, there is no need to invest in a component stock, as is the case with the above-mentioned modular supporting and/or reference structures. The supporting and/or reference structures do not need to be composed themselves, but only have to be fixed on the base structure, which can be done relatively fast and economically.

The supporting and/or reference structures can be made as separate from the base structure and can be connected afterwards to an already made base structure.

In this case, means are preferably provided on the base of the supporting and/or reference structures so as to be able to fix them to the base structure.

The base structure can be similar to the base structures which are used with the known modular structures, and it can for example be a base plate, or it can be built up of modular standard components.

Preferably, the base of the supporting and/or reference structures is provided with a labelling which makes it possible to fix them in the right place on the base structure later on.

Thanks to this marking or labelling of the supporting and/or reference structures, they can be manually fixed on the base structure in a fast, efficient manner, since the labelling precisely indicates in what position the supporting and/or reference structure has to be fixed for what piece.

Said fixing can be done by means of screws or special pens, or by means of snapping in, and at the design stage of the supporting and/or reference structures, their base is provided with the necessary openings or with one or several snap-in hooks.

The supporting and/or reference structures can also be connected to the base structure by the CAM or rapid prototyping technique itself, namely by being formed directly on the base structure.

The supporting and/or reference structures have to retain their shapes as much as possible, and suitable Rapid Prototyping techniques techniques which can provide such structures are for example, stereo lithography, selective laser sintering, fused deposition modelling and 3D printing, or CNC processing (computer numerical control), for example CNC milling.

If the piece is provided with a recess, a supporting structure is preferably designed which penetrates in this recess.

In order to better explain the characteristics of the invention, the following preferred embodiment of a method for manufacturing a supporting and/or reference construction according to the invention is described as an example only without being limitative in any way, with reference to the accompanying drawings, in which:
figure 1 represents a view in perspective of a supporting construction made with the method according to the invention;
figure 2 shows a view in perspective analogous to that in figure 1, but with the piece clamped on the supporting construction.

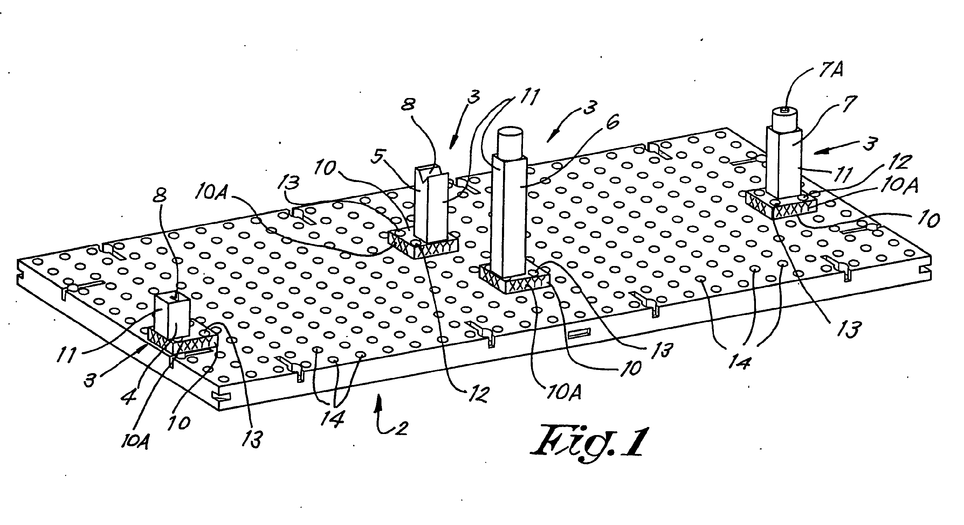

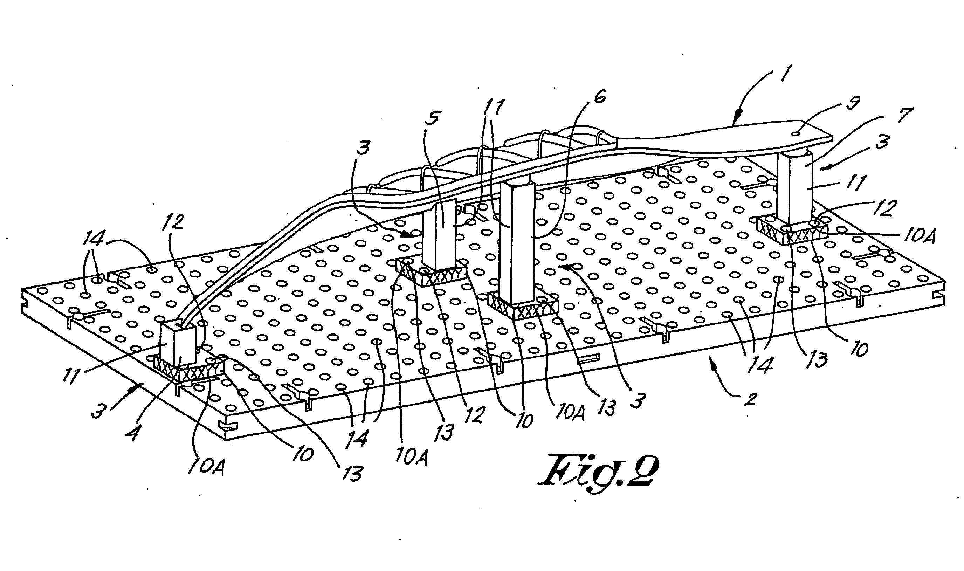

The supporting construction, represented in figure 1, for supporting and positioning a piece 1 as represented in figure 2 consists of a base structure 2 and a number of supporting structures 3, in the given example four columns 4 to 7.

This supporting construction is made as follows according to the invention.

The digital description of the piece 1 which was used to make the CAD model, in any format whatsoever, is put in a data processing unit and is first converted in an STL file (Standard Triangular Language-file).

In this data processing unit are situated the data related to the size and shape of a number of reference structures, for example plates, possibly parts thereof, or, because of their size, multipart reference structures.

The user selects one model for the base structure from these reference structures, namely the one corresponding to the base structure 2.

The digital description of the piece 1 is positioned in the space in the way that the ultimate measurement, control, assembly or processing will have to be carried out, i.e. in relation to the digital data of the base structure 2.

By means of an algorithm, the bottom side of the piece 1 is detected, and supporting points are selected. In general, these supporting points are downward protruding parts of the piece 1.

Normally, the two lowest points of the piece 1 are selected as supporting points, but if the span between these two lowest points is long, and a sag could be created between these points due to the own weight of the piece 1, the algorithm may decide to provide extra supporting points.

If the piece 1 is very flexible, for example made of rubber-like material, the algorithm may even select-entire surfaces of parts' of the bottom side of the piece 1 as a supporting point.

If the piece 1 on the supporting construction will be loaded, for example by certain treatments, the algorithm can possibly take into account other forces than the gravitational force to calculate the position and the number of supporting points.

The user can influence the above-mentioned selection of the supporting points in an interactive manner.

The data processing unit contains the required software to automatically design the column corresponding to every supporting point.

Hereby is started from a selection between a number of preprogrammed standard structures, i.e. standard columns. The standard column is selected as a function of the piece 1, the position of the supporting point above the base structure 2, the height of the column and the technique which will be used and adjusted to produce it.

First, the connection of the piece 1 to the supporting structure 3 is designed, which can be done, design-technically speaking, with a Boolean operation between the piece 1 and the supporting structure 3.

The most simple connection is a mere support, as is the case with columns 6 and 7. If there is a possibility of lateral forces being exerted on the piece 1, the supporting points are mainly selected on the edges, and the top side of the supporting structures 3 is designed such that an edge so to say cuts in the column, or, in other words, a recess or cut 8 is provided in the top side of the column, as is the case in columns 4 and 5.

Possibly, use can be made of holes 9 in the pierce 1 to connect the piece 1 to the supporting structure 3 afterwards, as is the case in column 7.

For, if the piece 1 has a hole 9, the supporting structure 3 can be provided with a small extrusion 7A which sticks in said hole 9 for the positioning and the absorption of lateral forces, as is the case in column 7.

The hole 9 can also merely be used to provide a screw or such in it which is screwed in the column 4 to 7.

After the top side has been designed, a supporting structure 3 is projected downward on a standard coupling element forming the foot 10 of the column 4 to 7. This coupling element is also digitally stored in the memory of the data processing unit, for example in STL.

Different embodiments of this coupling element may be stored, so that the user can make a selection.

The body 11 of the column 4 to 7 normally follows from a rectangular projection on the foot 10, but in view of the rigidity, this body 11 can widen gradually or in stages towards the bottom. The other way round is also possible, in order to obtain a wider supporting surface.

The above-mentioned projection on the foot 10 is normally perpendicular, but in certain cases, in order to make an attachment on the base structure 2 possible, the projection can be inclined.

The foot 10 is provided with a unique labelling 10A which represents the name of the piece 1 on the one hand, and the position where the foot 10 should be erected on the base structure 2 on the other hand.

The labelling 10A may also contain other information, such as whether the supporting structure 3 is designed for a master or is a copy of the piece 1.

The body 11 is connected to the foot 10 by means of a Boolean operation.

The entire supporting structure 3 or merely the body 11 can be hollow to allow for a more economical production. In this way, also deformations due to internal stress caused by shrinkage in thick-walled zones can be avoided.

The feet 10 contain one or several fixing hooks for the attachment on the base plate 2 or, as represented in the figures, openings 12 to provide fixing screws 13, preferably made of plastic, for the screwing onto this base structure 2. After the body 11 has been connected to the foot 10, two or three openings 12 remain free.

After the columns 4, 5, 6 and 7 have been designed, they are produced by means of Rapid Prototyping techniques, for example stereo lithography, controlled by the data processing unit.

It is clear that the columns 4, 5, 6 and 7 can also be made by means of other Rapid Prototyping techniques than stereo lithography, such as selective laser sintering, 3D printing or fused deposition modelling, and even by other computer-controlled or CAM techniques such as CNC processing, for example CNC milling.

In the given example, the base structure 2 is a plate with holes 14 having for example a diameter of 1 mm, at a mutual distance of 20 mm.

The base structure 2 may have different dimensions, but typically it is a rectangular plate of 325 mm x 650 mm, whereby the holes 14 are situated in rows and columns which are parallel to the long side, the short side respectively, of the base structure 2.

The rows of holes 14 may be marked by letters and the columns by figures, such that a letter and a figure unambiguously refer to one particular hole 14.

Larger base structures 2 can be made by fixing several smaller base structures 2 to one another, and the plates can be provided to this end with notches or such to position the plates and/or to attach them to one another.

The base structure 2 does not necessarily have to be a plate provided with openings.

It can also be a three-dimensional or spatial structure and it may consist for example of a plate with a surface-mounted structure. It may consist of standard elements which are built up to form a structure, for example of one or several plates and blocks, or exclusively of blocks and such coupled to one another.

In order to support a piece 1, a base structure 2 is taken which corresponds to the selected base structure in the data processing unit, and the columns 4 to 7 made by means of Rapid Prototyping are positioned on this base structure 2 in the place indicated on their feet 10, and they are fixed onto it by means of fixing screws 13 protruding through openings 12 in their feet 10 and fixed in holes 14 of said base structure 2.

The piece 1 is placed on the tops of the columns 4 to 7 and is perfectly supported and positioned by the latter.

With the exception of the column 6 which merely provides support, the columns 4, 5 and 7 also appear to fulfil a reference function, so that it is possible to check whether the piece 1 has the correct shape and dimensions, as a result of which the supporting structure is at the same time a reference construction.

However, this is not necessary, and it is possible that all the columns 4 to 7 exclusively provide support and that the construction is a mere supporting construction, as it is also possible that all the columns exclusively have a reference function, and the construction thus is a mere reference construction. In the latter case, the columns form templates in between which for example the piece 1 has to fit.

According to a variant, the base structure 2 is placed as a building platform in the Rapid Prototyping machine, and the columns 4 to 7 are built directly on this base structure 2.

Instead of putting the data of said base structure 2 in the data processing unit, one only has to design the columns 4 to 7 in relation to one and the same theoretical supporting surface.

No labelling, nor fixing means or openings 12 for the attachment on the base structure 2 have to be provided on the feet 10 in this case.

This variant is advantageous in that no assembly of the supporting structures 3 and of the base structure 2 is required.

In order to be able to re-use the base structure 2, the supporting structures 3 have to be detached from this base structure 2, and they cannot be used again afterwards in the absence of references.

The digital description does not necessarily have to be made in STL. The description can also be made on the basis of all possible CAD entities and voxels.

The selection of the supporting points and/or reference points does not necessarily have to be done automatically. The user can indicate these supporting points (surfaces and lines) on the CAD model.

It is clear that the shape of the columns 4 to 7 is merely given as an example. The body 11 must not necessarily have a square section, nor must the foot 10 be necessarily square. This foot, which can thus be round, rectangular or polygonal, can be connected to the body in other ways than as represented, and it can for example be situated sidewards to said body 11.

The labelling 10A can be provided in other ways and/or in other places than on the foot 10.

The number of openings 12 in the foot 10 must not be exactly four. Other fixing means than openings 12 and fixing screws 13 are possible, such as bolts and nuts, snap connections, taper pins and such. The base structure 2 could be provided with continuously adjustable fastening systems in order to fix the supporting structures 3.

Even holes or other fixing means are not necessary. The foot 10 can be glued to the base structure 2.

The base structure 2, as already mentioned, must not necessarily be a flat plate with round holes 14. Instead of being flat, it can be locally provided with steps. If the base structure 2 is composed of different parts, one such a part can be situated on top of another one.

With other fixing means than fixing screws 13, the base structure 2 can have other openings 12 than round ones, or even no openings 12 at all.

The invention is by no means limited to the above-described embodiment represented in the accompanying drawings; on the contrary, such a method for manufacturing a supporting structure can be made in all sorts of variants while still remaining within the scope of the invention.

## Claims

1. A method for manufacturing a supporting and/or reference construction for supporting and positioning and/or calibrating a piece (1) made on the basis of a digital description of the piece, which supporting and/or reference construction comprises of a base structure (2) and a number of supporting and/or reference structures (3) connected to it, said method comprising at least following steps:
- putting in the digital data of a piece (1) into a data processing unit;
- selecting a base structure, the size and shape of which are digitally stored or inputted in the data processing unit;
- positioning the digital description of the piece relative to the base structure in the data processing unit; and
- digitally generating in the data processing unit, on the basis of the digital description of the piece, a number of supporting and / or reference points; **characterised by** the further steps of:
- for each of said supporting and/or reference points digitally designing a supporting and/or reference structure being a column (4-7), which column consists of a body (11) having a top side and a foot (10),whereby the designing comprises the steps of:
o selecting a standard column from a number of standard columns being digitally stored in the data processing unit; and
o adjusting the selected standard column in function of the shape and size of the piece and base structure in said supporting and/or reference point, thereby providing the supporting and/or reference structure (3) being the column (4-7); and
- realizing the supporting and/or reference structures (3) by means of CAM or rapid prototyping techniques and connecting them to the base structure.

2. A method according to claim 1 wherein the selection of the standard column is made in function of the piece, the position of the supporting and/or reference points above the base structure, the height of the column and the techniques which will be used to produce it.

3. A method according to claim 1 or 2 wherein the adjustement of a standard column comprises the step of giving the top side of said column a shape which coincides with the shape of the piece in the supporting and/or reference point.

4. A method according to claim 3, wherein the step of giving the top side of said column a shape which coincides with the shape of the piece in the supporting and/or reference point is realized by means of a Boolean operation between the digital description of the piece and of the standard supporting and/or reference structure.

5. A method according to claim 1 to 4 wherein the adjustment of a standard column comprises the step of adjusting the body by a downward projection onto the foot

6. A method according to claim 1 to 5, wherein the support and/or reference structures are made as separate from the base structure and are connected afterwards to an already made base structure

7. A method according to claims 1 and 6 wherein means are formed on the foot of the supporting and./ or reference structures so as to be able to fix them to the base structure.

8. A method according to claim 7 wherein the means to fix the supporting and/or reference structures to the base structure are formed as openings or snap-in hooks

9. A method according to claim 1 to 5, wherein the supporting and/or reference structures are connected to the base structure by the CAM technique, the supporting and/or reference structures being formed directly on the base structure.

10. A method according to claim 1 to 9 wherein the Rapid Prototyping technique used to produce the supporting and/or reference structures, is in particular a technique selected out of the group consisting of stereolithography, selective laser sintering, fused deposition modelling, CNC processing and 3D printing.

11. A method according to claim 1 to 10 wherein the base structure contains at least one base plate provided with holes

12. A method according to claim 1 to 11 wherein the base structure has a modular spatial structure

13. A method according to claim 1 to 12 wherein the step of digitally selecting a number of supporting and/or reference points is carried out by means of an algorithm.

14. A method according to claim 1 to 12 wherein the step of digitally selecting a number of supporting and/or reference points is carried out automatically.

15. A method according to any of the preceding claims wherein the supporting and/or reference structures are provided with a labelling which makes it possible to connect them with the base structure in the right place

## Patentansprüche

1. Verfahren zur Herstellung einer Stütz- und/oder Referenzkonstruktion zum Stützen und Positionieren und/oder Vermessen eines Teils (1), hergestellt auf der Basis einer digitalen Beschreibung, wobei die Stütz- und/oder Referenzkonstruktion eine Basisstruktur (2) und eine Anzahl daran befestigter Stütz- und/oder Referenzstrukturen (3) umfasst, wobei das Verfahren zumindest die folgenden Schritte umfasst:
- Eingeben der digitalen Daten eines Teils (1) in eine Datenverarbeitungseinheit;
- Auswählen einer Basisstruktur, deren Größe und Form digital abgespeichert oder in die Datenverarbeitungseinheit eingegeben werden;
- Anordnen der digitalen Beschreibung des Teils relativ zu der Basisstruktur in der Datenverarbeitungseinheit;
- Digitales Erzeugen einer Anzahl von Stütz- und/oder Referenzpunkten auf der Basis der digitalen Beschreibung des Teils in der Datenverarbeitungseinheit;
- Digitales Designen einer Säule (4-7) als Stütz- und/oder Referenzstruktur für jeden der Stütz- und/oder Referenzpunkte, wobei die Säule aus einem Körper (11) mit einer Oberseite und einem Fuß (10) besteht, wobei das Designen die Schritte umfasst:
• Auswählen einer Standardsäule von einer Anzahl von Standardsäulen, welche auf der Datenverarbeitungseinheit digital abgespeichert sind;
• Anpassen der ausgewählten Standardsäule abhängig von der Form und der Größe des Teils und der Basisstruktur an dem Stütz- und/oder Referenzpunkt, **dadurch** Bereitstellen der Säule (4-7) als Stütz- und Referenzstruktur (3)
- Realisieren der Stütz- und/oder Referenzstrukturen (3) mittels eines CAM oder einer schnellen Prototypenbau-Technik und Ankoppeln von diesen an die Basisstruktur.

2. Verfahren nach Anspruch 1, wobei das Auswählen der Standardsäule ausgeführt wird abhängig von dem Teil, der Position der Stütz- und/oder Referenzpunkte über der Basisstruktur, der Höhe der Säulen und den Techniken, welche verwendet werden, um diese herzustellen.

3. Verfahren nach Anspruch 1 oder 2, wobei das Anpassen einer Standardsäule den Schritt umfasst, dass der Oberseite der Säule eine Form zugeteilt wird, welche mit der Form des Teils an dem Stütz- und/oder Referenzpunkt übereinstimmt.

4. Verfahren nach Anspruch 3, wobei der Schritt des Zuteilens einer Form, welche mit der Form des Teils an den Stütz- und/oder Referenzpunkt übereinstimmt, an die Oberseite der Säule realisiert wird durch Mittel einer Boolean-Operation zwischen der digitalen Beschreibung des Teils und der Standard Stütz- und/oder Referenzstruktur.

5. Verfahren nach einem der Ansprüche 1 bis 4, wobei das Anpassen einer Standardsäule den Schritt umfasst, dass der Körpers mittels einer nach unten gerichteten Projektion auf dem Fuß angeordnet wird.

6. Verfahren nach einem der Ansprüche 1 bis 5, wobei die Stütz- und/oder Referenzstrukturen getrennt von der Basisstruktur hergestellt werden und nachher an einer bereits hergestellten Basisstruktur angekoppelt werden.

7. Verfahren nach den Ansprüchen 1 und 6, wobei Mittel an dem Fuß der Stütz- und/oder Referenzstrukturen ausgebildet werden, so dass es möglich wird, diese an der Basisstruktur zu befestigen.

8. Verfahren nach Anspruch 7, wobei die Mittel zum Befestigen der Stütz- und/oder Referenzstrukturen an der Basisstruktur als Öffnungen oder Einschnapp-Haken ausgebildet werden.

9. Verfahren nach einem der Ansprüche 1 bis 5, wobei die Stütz- und/oder Referenzstrukturen mittels der CAM-Technik an die Basisstruktur angekoppelt werden und die Stütz- und/oder Referenzstrukturen direkt auf der Basisstruktur gebildet werden.

10. Verfahren nach einem der Ansprüche 1 bis 9, wobei eine schnelle Prototypenbau-Technik verwendet wird um die Stütz- und/oder Referenzstrukturen herzustellen, insbesondere eine Technik ausgewählt aus der Gruppe bestehend aus Stereolithographie, selektives Laser-Sintern, Schmelzschichtung, CNC-Verfahren und 3 D-Drucken.

11. Verfahren nach einem der Ansprüche 1 bis 10, wobei die Basisstruktur zumindest eine mit Löchern ausgestattete Basisplatte umfasst.

12. Verfahren nach einem der Ansprüche 1 bis 11, wobei die Basisstruktur eine modulare räumliche Struktur hat.

13. Verfahren nach einem der Ansprüche 1 bis 12, wobei der Schritt eines digitalen Auswählens einer Anzahl von Stütz- und/oder Referenzpunkten mittels eines Algorithmus ausgeführt wird.

14. Verfahren nach einem der Ansprüche 1 bis 12, wobei der Schritt eines digitalen Auswählens einer Anzahl von Stütz- und/oder Referenzpunkten automatisch ausgeführt wird.

15. Verfahren nach einem der vorhergehenden Ansprüche, wobei die Stütz- und/oder Referenzstrukturen mit einem Kennzeichen bereitgestellt werden, welches es möglich macht, sie an richtiger Stelle mit der Basisstruktur zu verbinden.

## Revendications

1. Procédé de fabrication d'une structure de référence et/ou de support pour supporter et positionner et/ou étalonner une pièce (1) réalisée sur la base d'une description numérique, laquelle structure de référence et/ou de support est composée d'une structure de base (2) et d'un certain nombre de structures de référence et/ou de support (3) reliées à cette dernière, ledit procédé comprenant au moins les étapes suivantes :
- l'insertion des données numériques d'une pièce (1) dans une unité de traitement de données ;
- la sélection d'une structure de base, dont la taille et la forme sont stockées ou entrées de façon numérique dans l'unité de traitement de données
- le positionnement de la description numérique de la pièce par rapport à la structure de base dans l'unité de traitement de données
- la production numérique dans l'unité de traitement de données, sur la base de la description numérique de la pièce, d'un certain nombre de points de référence et/ou de support ;
- pour chacun desdits points de référence et/ou de support, la conception numérique d'une structure de référence et/ou de support qui est une colonne (4 - 7), laquelle colonne consiste en un corps (11) ayant un côté supérieur et un pied (10), de sorte que la conception comprend les étapes suivantes :
• la sélection d'une colonne standard à partir d'un certain nombre de colonnes standards stockées de façon numérique dans l'unité de traitement de données ;
• le réglage de la colonne standard sélectionnée en fonction de la forme et de la taille de la pièce et de la structure de base dans ledit point de référence et/ou de support, fournissant de ce fait la structure de référence et/ou de support (3) qui est la colonne (4 - 7)
- la réalisation des structures de référence et/ou de support (3) au moyen de techniques de prototypage rapides ou CAM et leur connexion à la structure de base.

2. Procédé selon la revendication 1, dans lequel la sélection de la colonne standard est effectuée en fonction de la pièce, de la position des points de référence et/ou de support au-dessus de la structure de base, de la hauteur de la colonne et des techniques qui seront utilisées pour la produire.

3. Procédé selon la revendication 1 ou 2, dans lequel l'ajustement d'une colonne standard comprend l'étape consistant à donner au côté supérieur de ladite colonne une forme qui coïncide avec la forme de la pièce dans le point de référence et/ou de support.

4. Procédé selon la revendication 3, dans lequel l'étape consistant à donner au côté supérieur de ladite colonne une forme qui coïncide avec la forme de la pièce dans le point de référence et/ou de support est réalisée au moyen d'une opération Booléenne entre la description numérique de la pièce et de la structure de référence et/ou de support standard.

5. Procédé selon les revendications 1 à 4, dans lequel l'ajustement d'une colonne standard comprend l'étape consistant à ajuster le corps par une projection vers le bas sur le pied.

6. Procédé selon les revendications 1 à 5, dans lequel les structures de référence et/ou de support sont réalisées comme étant distinctes de la structure de base et sont reliées ensuite à une structure de base déjà réalisée.

7. Procédé selon les revendications 1 et 6, dans lequel des moyens sont formés sur le pied des structures de référence et/ou de support afin d'être susceptible de les fixer à la structure de base.

8. Procédé selon la revendication 7, dans lequel les moyens pour fixer les structures de référence et/ou de support à la structure de base sont formés comme des ouvertures ou des crochets enfichables.

9. Procédé selon les revendications 1 à 5, dans lequel les structures de référence et/ou de support sont reliées à la structure de base par la technique CAM, les structures de référence et/ou de support étant formées directement sur la structure de base.

10. Procédé selon la revendication 1 à 9, dans lequel une technique de Prototypage Rapide est utilisée pour produire les structures de référence et/ou de support, en particulier une technique sélectionnée parmi le groupe constitué de la stéréolithographie, du frittage sélectif au laser, du modelage par dépôt fondu, du traitement CNC et de l'impression 3D.

11. Procédé selon la revendication 1 à 10, dans lequel la structure de base contient au moins une embase munie de trous.

12. Procédé selon les revendications 1 à 11, dans lequel la structure de base a une structure spatiale modulaire.

13. Procédé selon les revendications 1 à 12, dans lequel l'étape de sélection numérique d'un certain nombre de points de référence et/ou de support est effectuée au moyen d'un algorithme.

14. Procédé selon les revendications 1 à 12, dans lequel l'étape de sélection numérique d'un certain nombre de points de référence et/ou de support est effectuée automatiquement.

15. Procédé selon l'une quelconque des revendications précédentes, dans lequel les structures de référence et/ou de support sont munies d'un étiquetage qui permet de les relier à la structure de base à la bonne place.
